# EUROPÄISCHE PATENTSCHRIFT

(11) **EP 2 782 800 B1**
(45) Veröffentlichungstag und Bekanntmachung des Hinweises auf die Patenterteilung: **06.11.2019**
(21) Anmeldenummer: 12770039.1
(22) Anmeldetag: 24.09.2012
(51) Int. Cl.: B60S 1/52

(54) **WISCHVORRICHTUNG MIT ZUMINDEST EINEM WISCHARM UND MIT ZUMINDEST EINEM DÜSENELEMENT**
WIPING DEVICE WITH A WIPER ARM AND AT LEAST A NOZZLE ELEMENT
BALAI D'ESSUIE GLACE AVEC BRAS ET AU MOINS UNE BUSE

(30) Priorität: 22.11.2011 DE 102011086780
(43) Veröffentlichungstag der Anmeldung: 01.10.2014
(73) Patentinhaber: Robert Bosch GmbH, 70442 Stuttgart (DE)
(72) Erfinder: WOLFGARTEN, Sven, 77815 Buehl (DE); RAPP, Harald, 77815 Buehl (DE)
(86) Internationale Anmeldenummer: PCT/EP2012/068719
(87) Internationale Veröffentlichungsnummer: WO 2013/075860

(56) Entgegenhaltungen:
- EP-A1- 1 985 513
- EP-A2- 0 974 503
- DE-A1- 19 815 171
- DE-A1-102004 007 351
- US-A- 3 790 083

## Beschreibung

### Stand der Technik

Es ist bereits eine Wischvorrichtung mit zumindest einem Wischarm, zumindest einem an dem Wischarm befestigbaren Wischblatt, das zumindest eine Wischlippe umfasst, und mit zumindest einem Düsenelement, das dazu vorgesehen ist, ein Wischwasser zu versprühen, vorgeschlagen worden.

Dokument DE 10 2004 007 351 A1 offenbart ein Wischsystem gemäß dem Oberbegriff des Anspruchs 1.

### Offenbarung der Erfindung

Die Erfindung geht aus von einer Wischvorrichtung mit zumindest einem Wischarm und mit zumindest einem Düsenelement, das dazu vorgesehen ist, ein Wischwasser zu versprühen.

Es wird vorgeschlagen, dass das zumindest eine Düsenelement in einer tiefen Position direkt mit dem Wischarm verbunden ist. Dadurch kann eine Wischvorrichtung bereitgestellt werden, die insbesondere leicht auf verschiedene Kraftfahrzeuge applizierbar ist. Unter einem "Wischarm" soll dabei insbesondere ein an seinem einen Ende mit einem Wischermotor verbundenes längliches Element der Wischvorrichtung verstanden werden, das eine Wischbewegung von dem Wischermotor an ein, an dem dem Ende, welches mit dem Wischermotor verbunden ist, gegenüberliegenden Ende, angebrachtes Wischblatt überträgt. Unter einem Düsenelement soll in diesem Zusammenhang insbesondere ein Element verstanden werden, das dazu vorgesehen ist, eine Flüssigkeit, insbesondere ein Waschwasser zur Reinigung einer Kraftfahrzeugscheibe in eine bestimmte Sprührichtung zu sprühen. Dabei weist das Düsenelement vorzugsweise ein Anschlusselement zum Anschließen eines Waschwasserschlauchs auf. Unter einer "tiefen Position" soll insbesondere eine Position des Düsenelements gegenüber dem Wischblatt verstanden werden, wobei das Düsenelement in Arbeitsstellung insbesondere in Richtung einer Kraftfahrzeugscheibe über eine der Kraftfahrzeugscheibe zugewandten Unterkante des Wischarms hinaussteht. Unter "direkt mit dem Wischarm verbunden" soll insbesondere verstanden werden, dass das Düsenelement und/oder ein dem Düsenelement oder dem Wischarm zuordenbares Haltemittel unmittelbar mit dem Wischarm verbunden ist, sich also das Düsenelement und der Wischarm an einer Berührstelle direkt oder über das Haltemittel berühren und insbesondere über diese Berührstelle fest miteinander verbunden sind. Dabei soll unter "direkt mit dem Wischarm verbunden" insbesondere nicht verstanden werden, dass das Düsenelement über ein weiteres, insbesondere ein über eine reine Haltefunktion hinausgehendes Funktionsbauteil, wie beispielsweise eine Wischblattführung, mit dem Wischarm verbunden ist.

In der Erfindung ragt das zumindest eine Düsenelement zumindest 10 mm unter einer Unterkante des Wischarms hinaus. Dadurch befindet sich das Düsenelement in einer besonders vorteilhaften Position, um das Wischwasser besonders vorteilhaft zu versprühen. In eine besonders vorteilhafte Ausgestaltung ragt das Düsenelement zumindest 15 mm unter die Unterkante des Wischarms hinaus. Unter "X mm unter einer Unterkante des Wischarms hinausragen" soll dabei insbesondere verstanden werden, dass eine der Unterkante des Wischarms abgewandte Seite des Düsenelements um X mm in Richtung der Kraftfahrzeugscheibe über den Wischarm hinaus steht, also in einem montierten Zustand X mm näher an der Kraftfahrzeugscheibe ist als die Unterkante des Wischarms.

Des Weiteren wird vorgeschlagen, dass das zumindest eine Düsenelement als ein separates Bauteil ausgebildet ist. Dadurch können die einzelnen Bauteile wie Düsenelement und Wischarm konstruktiv besonders einfach ausgebildet werden. Unter einem "separaten Bauteil" soll dabei insbesondere verstanden werden, dass das Bauteil in einem separaten Verfahren hergestellt ist und/oder vor einer Montage getrennt von dem Wischarm und ohne gemeinsames Bauteil mit dem Wischarm oder einer Wischblattführung ausgebildet ist.

Ferner wird vorgeschlagen, dass das zumindest eine Düsenelement dazu vorgesehen ist, ein Wischwasser zumindest im Wesentlichen in Richtung einer Wischlippe zu spritzen. Dadurch kann das Wischwasser besonders vorteilhaft und ohne eine Beeinträchtigung eines Fahrers zum Wischen der Kraftfahrzeugscheibe aufgebracht werden. Unter einer "Wischlippe" soll dabei insbesondere ein Teil eines Wischblatts verstanden werden, der in einer Betriebsstellung der Wischvorrichtung auf der Kraftfahrzeugscheibe aufliegt und dazu vorgesehen ist, diese zu wischen. Unter einem "Wischblatt" soll insbesondere eine Baugruppe verstanden werden, die aus mehreren Elementen wie einer Wischlippe, einem Spoilerelement, einer Federschiene und Endkappen zusammengesetzt ist und dazu vorgesehen ist, mit der Wischlippe vollständig auf einer zu wischenden Kraftfahrzeugscheibe aufzuliegen. Unter "zumindest im Wesentlichen in Richtung der Wischlippe spritzen" soll insbesondere verstanden werden, dass ein Wischwasserstrahl, der aus dem Düsenelement austritt, von einer parallel zu der Haupterstreckungsrichtung des Wischarms stehenden, senkrecht auf der Kraftfahrzeugscheibe stehenden und durch das Düsenelement verlaufenden Ebene aus, in eine in Richtung des Wischblatts gerichtete Spritzrichtung gespritzt wird.

Zudem wird vorgeschlagen, dass das zumindest eine Düsenelement zumindest einen Spritzkanal aufweist, dessen Ende zumindest im Wesentlichen in Richtung der Wischlippe gerichtet ist. Dadurch kann das Wischwasser besonders einfach in Richtung der Wischlippe gespritzt werden. Unter einem "Spritzkanal" soll dabei insbesondere ein Kanal verstanden werden, durch den das Wischwasser aus einem Inneren des Düsenelements nach außen geleitet werden kann. Unter einem "Ende des Spritzkanals" soll dabei insbesondere eine Öffnung in dem Düsenelement verstanden werden, die über den Spritzkanal mit dem Inneren des Düsenelements verbunden ist und so ein Wischwasser über den Spritzkanal und dessen Öffnung aus dem Inneren des Düsenelements nach außen treten kann und so beispielsweise auf die Kraftfahrzeugscheibe gespritzt werden kann. Dabei kann der Spritzkanal eine spezielle Form, insbesondere eine spezielle Innenkontur, wie beispielsweise eine Konusform, aufweisen, durch die ein durch den Spritzkanal geführtes Wischwasser beschleunigt und gebündelt werden kann. Grundsätzlich sind dabei auch andere, dem Fachmann als sinnvoll erscheinende Innenkonturen für den Spritzkanal denkbar.

Es wird weiter vorgeschlagen, dass das Düsenelement zumindest einen weiteren Spritzkanal aufweist, dessen Ende in eine andere Richtung gerichtet ist als das Ende des ersten Spritzkanals. Dadurch kann das Wischwasser besonders vorteilhaft über eine Länge der Wischlippe verteilt werden. Unter einer "anderen Richtung" soll dabei insbesondere verstanden werden, dass der weitere Spritzkanal mit der Haupterstreckungsrichtung des Wischblatts einen anderen Winkel einschließt als der erste Spritzkanal.

Weiterhin wird vorgeschlagen, dass das zumindest eine Düsenelement zwischen einem Innenkreis des Wischblatts und einer Verbindungsadaptereinheit näher in Richtung der Verbindungsadaptereinheit angeordnet ist. Dadurch kann das Düsenelement für eine besonders effiziente Verteilung des Wischwassers besonders vorteilhaft platziert werden. Unter einem "Innenkreis" soll dabei insbesondere ein freies, inneres Wischblattende verstanden werden. Unter einem "freien, inneren Wischblattende" soll in diesem Zusammenhang insbesondere ein Ende eines Bauteils, insbesondere des Wischblatts, verstanden werden, das zu einem Drehzentrum der Wischvorrichtung zeigt, um das sich die Wischvorrichtung in einem Betriebszustand dreht. Unter "näher in Richtung der Verbindungsadaptereinheit" soll dabei insbesondere verstanden werden, dass ein Abstand zwischen dem Düsenelement und der Verbindungsadaptereinheit wesentlich kleiner ist als ein Abstand zwischen dem Düsenelement und dem Innenkreis. Unter "wesentlich kleiner" soll in diesem Zusammenhang insbesondere verstanden werden, dass der Abstand zwischen dem Düsenelement und der Verbindungsadaptereinheit höchstens 1/3 des Abstands zwischen dem Düsenelement und dem Innenkreis beträgt.

Zudem wird vorgeschlagen, dass die Wischvorrichtung ein zweites Düsenelement aufweist, wobei das zweite Düsenelement näher in Richtung des Innenkreises angeordnet ist. Dadurch kann das Wischwasser besonders gut und vollständig auf der gesamten Wischlippe verteilt werden. Unter "näher in Richtung des Innenkreises" soll dabei insbesondere verstanden werden, dass ein Abstand zwischen dem zweiten Düsenelement und dem Innenkreis wesentlich kleiner ist als ein Abstand zwischen dem zweiten Düsenelement und der Verbindungsadaptereinheit. Unter "wesentlich kleiner" soll in diesem Zusammenhang insbesondere verstanden werden, dass der Abstand zwischen dem zweiten Düsenelement und dem Innenkreis höchstens 1/5 des Abstands zwischen dem zweiten Düsenelement und der Verbindungsadaptereinheit beträgt.

Ferner wird vorgeschlagen, dass der Wischarm einen Wischarmadapter aufweist, an dem das eine Düsenelement angeordnet ist. Dadurch kann mit dem einen Düsenelement die gesamte Wischlippe besonders einfach mit Wischwasser benetzt werden.

Unter einem "Wischarmadapter" soll in diesem Zusammenhang insbesondere ein Adapter verstanden werden, der einen Kontaktbereich zu dem Wischarm aufweist und mit dem Wischarm unverlierbar verbunden ist und dazu vorgesehen ist, einen Kopplungsbereich des Wischarms für eine Kopplung und/oder Kontaktierung mit einem Wischblattadapter bereitzustellen. Unter einem "Wischblattadapter" soll in diesem Zusammenhang insbesondere ein Adapter verstanden werden, der einen Kontaktbereich zu dem Wischblatt aufweist und mit dem Wischblatt unverlierbar verbunden ist und dazu vorgesehen ist, einen Kopplungsbereich des Wischblatts für eine Kopplung und/oder Kontaktierung mit dem Wischarmadapter bereitzustellen. Unter "an dem Wischarmadapter angeordnet" soll insbesondere verstanden werden, dass das Düsenelement unmittelbar bei dem Wischarmadapter angeordnet ist und entweder direkt und fest mit dem Wischarmadapter verbunden ist oder direkt an einer Stelle des Wischarms mit dem Wischarm angebunden ist, an der dieser mit dem Wischarmadapter verbunden ist, bzw. in den Wischarmadapter übergeht. Dabei weist das Düsenelement vorteilhafterweise einen Abstand von dem Wischarmadapter auf, der kleiner als 5 mm, vorteilhaft kleiner als 3 mm und in einer besonders vorteilhaften Ausgestaltung kleiner als 1 mm ist. Das Düsenelement ist vorteilhafterweise so nah an dem Wischarmadapter angeordnet, dass das Düsenelement für einen Fahrer möglichst nicht als ein von dem Wischarmadapter separates Bauteil zu erkennen ist.

Ferner wird vorgeschlagen, dass das Düsenelement zumindest zwei Spritzkanäle aufweist, wobei ein Ende des einen Spritzkanals in Richtung eines Innenkreises und ein Ende des anderen Spritzkanals in Richtung eines Außenkreises gerichtet ist. Dadurch kann die Wischlippe besonders einfach vollständig von dem ausschließlich einen Düsenelement mit Wischwasser benetzt werden. Unter "in Richtung des Innenkreises gerichtet" soll dabei insbesondere verstanden werden, dass das Wischwasser, das aus dem entsprechenden Spritzkanal gespritzt wird, in Richtung des Innenkreises gespritzt wird. Unter "in Richtung des Außenkreises gerichtet" soll dabei insbesondere verstanden werden, dass das Wischwasser, das aus dem entsprechenden Spritzkanal gespritzt wird, in Richtung des Außenkreises gespritzt wird.

Weiter wird vorgeschlagen, dass das Wischblatt frei von einer Innenkreisführung ist. Dadurch kann die Wischvorrichtung besonders einfach ausgeführt werden. Unter einer "Innenkreisführung" soll in diesem Zusammenhang insbesondere eine Einheit verstanden werden, die dazu vorgesehen ist, ein freies, inneres Wischblattende des Wischblatts in einem Betriebszustand entlang einer Innenkreisbahn der Innenkreisführung zu führen.

### Zeichnung

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 rein erfindungsgemäßes Wischsystem in einem ersten Ausführungsbeispiel mit einem Düsenelement,
Fig. 2 ein erfindungsgemäßes Wischsystem in einem zweiten Ausführungsbeispiel mit zwei Düsenelementen und
Fig. 3 ein erfindungsgemäßes Wischsystem in einem dritten Ausführungsbeispiel mit einem Düsenelement an einem Wischarmadapter.

### Beschreibung der Ausführungsbeispiele

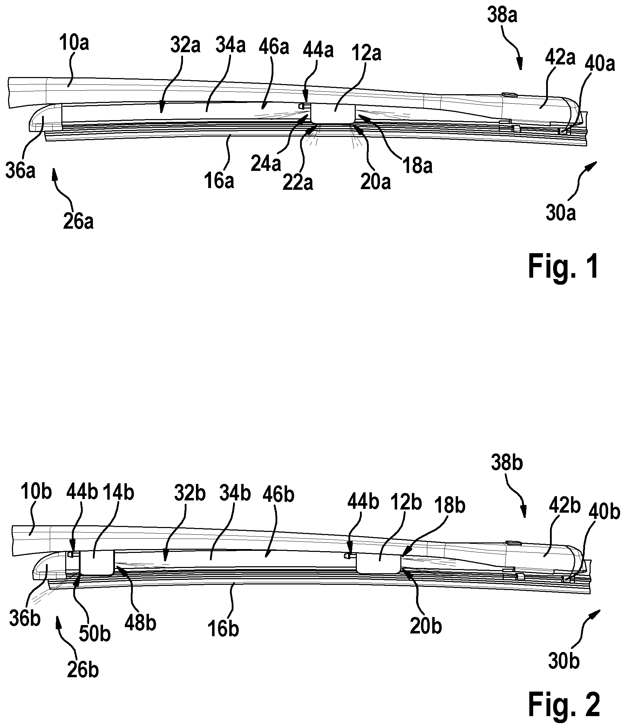

Figur 1 zeigt ein erfindungsgemäßes Wischsystem in einem ersten Ausführungsbeispiel. Die Wischvorrichtung umfasst einen Wischarm 10a, der mittels eines nicht näher dargestellten Wischermotors in einer Schwenkbewegung antreibbar ist. Der Wischarm 10a ist nur prinzipiell dargestellt und soll keine Einschränkung auf seine Ausgestaltung darstellen. Die Wischvorrichtung umfasst ein Wischblatt 32a, das in einem montierten Zustand dazu vorgesehen ist, eine Kraftfahrzeugscheibe zu wischen. Das Wischblatt 32a ist aus mehreren Komponenten aufgebaut. Das Wischblatt 32a umfasst eine Wischlippe 16a, die in montiertem Zustand auf der Kraftfahrzeugscheibe aufliegt und eine nicht näher dargestellte Federschiene, die fest mit der Wischlippe 16a verbunden ist und diese über ihre gesamte Länge gegen die Kraftfahrzeugscheibe drückt und dabei eine Wischkraft auf die Wischlippe 16a überträgt. Des Weiteren umfasst das Wischblatt 32a zumindest zwei Spoilerelemente 34a, die auf einer der Kraftfahrzeugscheibe in montiertem Zustand abgewandten Seite des Wischblatts 32a angeordnet sind. Die Spoilerelemente 34a weisen eine aerodynamische Form auf und sind dazu vorgesehen, das Wischblatt 32a während einer Fahrt gegen die Kraftfahrzeugscheibe zu pressen und dadurch zu verhindern, dass die Wischlippe 16a von der Kraftfahrzeugscheibe abhebt. Weiterhin umfasst das Wischblatt 32a zwei Endkappen 36a, die das Wischblatt 32a jeweils an einer Seite in Richtung seiner Haupterstreckungsrichtung begrenzen und abschließen. Grundsätzlich ist es natürlich auch denkbar, dass das Wischblatt 32a weitere Komponenten aufweist oder aus weniger Komponenten besteht. Das Wischblatt 32a ist dabei frei von einer Innenkreisführung. Das Wischblatt 32 weist an seinem Innenkreis 26a keine Innenkreisführung auf, die das Wischblatt 32a an seinem Innenkreis 26a unterhalb des Wischarms 10a fixiert. Grundsätzlich ist es aber auch denkbar, dass das Wischblatt 32a über eine Innenkreisführung unterhalb des Wischarms 10a fixiert ist.

Zur Verbindung des Wischblatts 32a mit dem Wischarm 10a weist die Wischvorrichtung eine Verbindungsadaptereinheit 38a auf. Die Verbindungsadaptereinheit 38a weist einen Wischblattadapter 40a und einen Wischarmadapter 42a auf. Der Wischblattadapter 40a ist fest mit dem Wischblatt 32a verbunden. Dabei ist es denkbar, dass der Wischblattadapter 40a fest und zerstörungsfrei untrennbar mit dem Wischblatt 32a verbunden ist. Grundsätzlich kann der Wischblattadapter 40a, auch mechanisch trennbar, beispielsweise durch eine Rastverbindung, mit dem Wischblatt 32a verbunden sein. Der Wischarmadapter 42a ist fest mit dem Wischarm 10a verbunden. Dabei gilt ebenfalls, dass der Wischarmadapter 42a fest und untrennbar oder fest und lösbar mit dem Wischarm 10a verbunden sein kann. Der Wischarmadapter 42a ist fest, aber mechanisch und zerstörungsfrei trennbar mit dem Wischblattadapter 40a verbindbar. Dadurch kann das Wischblatt 32a mittels des Wischblattadapters 40a und des Wischarmadapters 42a fest mit dem Wischarm 10a verbunden werden.

Die Wischvorrichtung umfasst weiter ein Düsenelement 12a, welches dazu vorgesehen ist, ein Wischwasser zu versprühen. Dazu weist das Düsenelement 12a zumindest ein Schlauchanschluss 44a auf, an dem ein, in einem Betriebszustand Wischwasser führender, nicht näher dargestellter, Wischwasserschlauch anschließbar ist. Über den Schlauchanschluss 44a kann ein Wischwasser über den angeschlossenen Wischwasserschlauch in ein Inneres des Düsenelements 12a gelangen. Der Wischwasserschlauch ist dabei an dem Wischarm 10a geführt. Dabei kann der Wischwasserschlauch grundsätzlich seitlich oder unterhalb des Wischarms 10a geführt werden. Grundsätzlich ist es auch denkbar, dass der Wischwasserschlauch direkt in den Wischarm 10a integriert ist. Dabei ist ein dem Düsenelement 12a abgewandtes Ende des Wischwasserschlauchs mit einer nicht näher dargestellten Pumpeneinheit verbunden, mittels der ein Wischwasser aus einem nicht näher dargestellten Wischwassertank durch den Wischwasserschlauch zu dem Düsenelement 12a gepumpt werden kann.

Das Düsenelement 12a ist zwischen dem Innenkreis 26a des Wischblatts 32a und der Verbindungsadaptereinheit 38a angeordnet. Dabei ist das Düsenelement 12a tendenziell in Richtung der Verbindungsadaptereinheit 38a angeordnet. Ein Abstand des Düsenelements 12a zu dem Innenkreis 26a des Wischblatts 32a ist größer als ein Abstand des Düsenelements 12a zu der Verbindungsadaptereinheit 38a. Der Abstand zwischen dem Düsenelement 12a und der Verbindungsadaptereinheit 38a ist dabei etwa halb so groß wie der Abstand zwischen dem Düsenelement 12a und dem Innenkreis 26a des Wischblatts 32a. Grundsätzlich ist es allerdings auch denkbar, dass der Abstand zwischen dem Düsenelement 12a und der Verbindungsadaptereinheit 38a und der Abstand zwischen dem Düsenelement 12a und dem Innenkreis 26a des Wischblatts 32a in etwa gleich groß sind, oder die Abstände ein anderes, dem Fachmann als sinnvoll erscheinendes Verhältnis zueinander aufweisen.

Das Düsenelement 12a ist in einer tiefen Position direkt mit dem Wischarm 10a verbunden. Das Düsenelement 12a ist fest mit dem Wischarm 10a verbunden. Mittels einer Klebeverbindung ist das Düsenelement 12a fest an dem Wischarm 10a angebracht. Es ist grundsätzlich auch denkbar, dass das Düsenelement 12a mittels einer anderen Befestigungsmethode, beispielsweise mittels einer Rastverbindung durch einen Formschluss, mit dem Wischarm 10a verbunden ist. Grundsätzlich ist es natürlich auch denkbar, dass das Düsenelement 12a mittels einer anderen, dem Fachmann als sinnvoll erscheinenden Befestigungsmethode an dem Wischarm 10a angebunden ist.

Das Düsenelement 12a ragt dabei zumindest 10 mm unter einer Unterkante 46a des Wischarms 10a hinaus. Grundsätzlich ist es natürlich auch denkbar, dass das Düsenelement 12a weiter oder weniger weit unter die Unterkante 46a des Wischarms 10a hinaus ragt. Dabei wird von einer in montiertem Zustand der Kraftfahrzeugscheibe zugewandten Seite des Düsenelements 12a aus bis zu der in montiertem Zustand der Kraftfahrzeugscheibe zugewandten Unterkante 46a des Wischarms 10a gemessen. Das Düsenelement 12a befindet sich dadurch im Bezug auf die Kraftfahrzeugscheibe auf einer gleichen Höhe wie die Wischlippe 16a des Wischblatts 32a. Dabei befindet sich das Düsenelement 12a auf der einem Fahrer zugewandten und einer Motorhaube abgewandten Seite des Wischarms 10a. Dadurch liegt das Düsenelement 12a während einer Fahrt insbesondere in einem Windschatten des Wischarms 10a und des Wischblatts 32a.

Dabei ist das Düsenelement 12a als ein separates Bauteil ausgebildet. Das Düsenelement 12a ist dabei als ein Spritzgussteil in einem separaten Spritzgussverfahren hergestellt. Dabei ist es auch denkbar, dass das Düsenelement 12a mittels eines anderen, dem Fachmann als sinnvoll erscheinenden, Verfahrens als separates Bauteil hergestellt ist. Dabei ist es weiter denkbar, dass ein nicht näher dargestelltes Heizelement in das Düsenelement 12a integriert ist, wodurch ein Zufrieren des Düsenelements 12a bei kalten Temperaturen verhindert werden kann. Das Heizelement kann dabei direkt, beispielsweise bei einem Spritzgussverfahren, in das Düsenelement 12a integriert oder auch separat, beispielsweise durch einen Formschluss, in das Düsenelement 12a eingebaut werden. Grundsätzlich kann auf ein Heizelement auch verzichtet werden.

Das Düsenelement 12a ist dazu vorgesehen, das Wischwasser zumindest im Wesentlichen in Richtung der Wischlippe 16a zu spritzen. Dazu weist das Düsenelement 12a vier Spritzkanäle 18a, 20a, 22a, 24a auf. Die Spritzkanäle 18a, 20a, 22a, 24a sind direkt mit dem Schlauchanschluss 44a verbunden. Die Spritzkanäle 18a, 20a, 22a, 24a führen von einem Inneren des Düsenelements 12a nach außen. Ein Ende der Spritzkanäle ist jeweils als eine Öffnung ausgebildet, durch die das Wischwasser aus dem Düsenelement 12a austreten kann. Dadurch kann das Wischwasser, das durch den Schlauchanschluss 44a in das Innere des Düsenelements 12a gepumpt wird, über die Spritzkanäle 18a, 20a, 22a, 24a wieder aus dem Inneren des Düsenelement 12a austreten. Dabei können die Spritzkanäle 18a, 20a, 22a, 24a eine konische oder eine andere, dem Fachmann als sinnvoll erscheinende Form aufweisen, die nach außen gerichtet ist, wodurch das aus den Spritzkanälen 18a, 20a, 22a, 24a austretende Wischwasser fokussiert und beschleunigt werden kann. Dabei sind die Enden der Spritzkanäle 18a, 20a, 22a, 24a jeweils zumindest im Wesentlichen in Richtung der Wischlippe 16a gerichtet. Dadurch wird das Wischwasser vorzugsweise auf die Wischlippe 16a gespritzt, wodurch das Wischwasser über die Wischlippe 16a die gesamte Kraftfahrzeugscheibe benetzt, die von der Wischlippe 16a überfahren wird. Grundsätzlich ist es aus Toleranzgründen auch denkbar, dass das Wischwasser kurz vor der Wischlippe 16a auf die Kraftfahrzeugscheibe gespritzt wird. Beide Spritzergebnisse sind für einen Fahrzeugführer nicht störend.

Das Ende des ersten Spritzkanals 18a ist in Richtung des Außenkreises 30a gerichtet. Dabei ist der Spritzkanal 18a fast parallel zu der Haupterstreckungsrichtung des Wischarms 10a ausgerichtet. Der erste Spritzkanal 18a weist dabei eine leichte Neigung in Richtung der Kraftfahrzeugscheibe auf. Die Neigung beträgt dabei etwa 10 Grad. Das Ende des zweiten Spritzkanals 20a ist ebenfalls in Richtung des Außenkreises 30a gerichtet. Eine Neigung des zweiten Spritzkanals 20a von der Haupterstreckungsrichtung des Wischarms 10a in Richtung der Kraftfahrzeugscheibe beträgt in etwa 30 Grad. Der dritte Spritzkanal 22a ist in etwa orthogonal zu der Haupterstreckungsrichtung des Wischarms 10a ausgerichtet. Eine Neigung desdritten Spritzkanals 22a von der Haupterstreckungsrichtung des Wischarms 10a in Richtung der Kraftfahrzeugscheibe beträgt dabei in etwa 90 Grad. Das Ende des vierten Spritzkanals 24a ist in Richtung des Innenkreises 26a des Wischblatts 32a gerichtet. Eine Neigung des vierten Spritzkanals 24a von der Haupterstreckungsrichtung des Wischarms 10a in Richtung der Kraftfahrzeugscheibe beträgt dabei in etwa 30 Grad. Die Gradangaben der Neigungen der vier Spritzkanäle 18a, 20a, 22a, 24a sind nur in etwa angegeben. Eine Abweichung von den angegebenen Gradzahlen kann dabei jeweils bis zu plus bzw. minus 15 Grad betragen. Grundsätzlich ist es auch denkbar, dass das Düsenelement 12a nur 3 oder auch nur 2 Spritzkanäle 18a, 20a, 22a, 24a aufweist. Dies hängt von einer gewünschten Wischwassermenge und Wischwasserverteilung ab, die von der Wischvorrichtung erbracht werden soll.

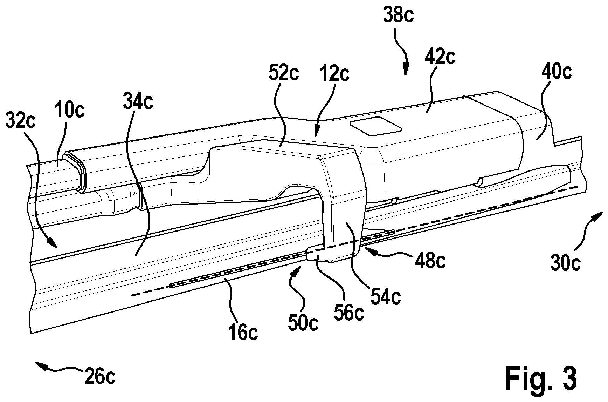

In den Figuren 2 und 3 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2 und 3 ist der Buchstabe a durch die Buchstaben b und c ersetzt.

Die Figur 2 zeigt ein zweites Ausführungsbeispiel des erfindungsgemäßen Wischsystems. Die Wischvorrichtung umfasst einen Wischarm 10b, der mittels eines nicht näher dargestellten Wischermotors in einer Schwenkbewegung antreibbar ist. Die Wischvorrichtung umfasst ein Wischblatt 32b, das in einem montierten Zustand dazu vorgesehen ist, eine nicht näher dargestellte Kraftfahrzeugscheibe zu wischen. Das Wischblatt 32a ist aus mehreren Komponenten aufgebaut. Das Wischblatt 32b umfasst eine Wischlippe 16b, die in montiertem Zustand auf der Kraftfahrzeugscheibe aufliegt und eine nicht näher dargestellte Federschiene, die fest mit der Wischlippe 16b verbunden ist und diese über ihre gesamte Länge gegen die Kraftfahrzeugscheibe drückt und dabei eine Wischkraft auf die Wischlippe 16b überträgt. Das Wischblatt 32b ist dabei frei von einer Innenkreisführung. Das Wischblatt 32b weist an seinem Innenkreis 26a keine Innenkreisführung auf, die das Wischblatt 32b an seinem Innenkreis 26b unterhalb des Wischarms 10b fixiert.

Zur Verbindung des Wischblatts 32b mit dem Wischarm 10b weist die Wischvorrichtung eine Verbindungsadaptereinheit 38b auf. Die Verbindungsadaptereinheit 38b weist einen Wischblattadapter 40b und einen Wischarmadapter 42b auf. Der Wischblattadapter 40b ist fest mit dem Wischblatt 32b verbunden. Der Wischarmadapter 42b ist fest mit dem Wischarm 10b verbunden. Dadurch kann das Wischblatt 32b mittels des Wischblattadapters 40b und des Wischarmadapters 42b fest mit dem Wischarm 10b verbunden werden.

Die Wischvorrichtung umfasst weiter ein erstes Düsenelement 12b und ein zweites Düsenelement 14b, welche dazu vorgesehen sind, Wischwasser zu versprühen. Dazu weisen die Düsenelemente 12b, 14b jeweils zumindest ein Schlauchanschluss 44b auf, an dem jeweils ein, in einem Betriebszustand Wischwasser führender, nicht näher dargestellter, Wischwasserschlauch anschließbar ist. Die Düsenelemente 14b, 14b sind jeweils als separate Bauteile ausgebildet.

Das erste Düsenelement 12b ist zwischen dem Innenkreis 26b des Wischblatts 32b und der Verbindungsadaptereinheit 38b angeordnet. Dabei ist das Düsenelement 12b tendenziell in Richtung der Verbindungsadaptereinheit 38b angeordnet. Ein Abstand des Düsenelements 12b zu dem Innenkreis 26b des Wischblatts 32b ist größer als ein Abstand des Düsenelements 12b zu der Verbindungsadaptereinheit 38b. Der Abstand zwischen dem Düsenelement 12b und der Verbindungsadaptereinheit 38b ist dabei etwa halb so groß wie der Abstand zwischen dem Düsenelement 12b und dem Innenkreis 26b des Wischblatts 32b. Dabei ist das erste Düsenelement 12b in einer tiefen Position direkt mit dem Wischarm 10b verbunden.

Das erste Düsenelement 12b ist dazu vorgesehen, das Wischwasser zumindest im Wesentlichen in Richtung der Wischlippe 16b zu spritzen. Dazu weist das Düsenelement 12b zwei Spritzkanäle 18b, 20b auf. Die Spritzkanäle 18b, 20b sind direkt mit dem Schlauchanschluss 44b des Düsenelements 12b verbunden. Die Spritzkanäle 18b, 20b führen von einem Inneren des Düsenelements 12b nach außen. Dadurch kann das Wischwasser, das durch den Schlauchanschluss 44b in das Innere des ersten Düsenelements 12b gepumpt wird, über die Spritzkanäle 18b, 20b wieder aus dem Inneren des Düsenelements 12b austreten. Die Spritzkanäle 18b, 20b sind dabei im Wesentlichen in Richtung der Wischlippe 16b ausgerichtet. Ein Ende des ersten Spritzkanals 18b des ersten Düsenelements 12b ist in Richtung eines Außenkreises 30b des Wischblatts 32b gerichtet. Der erste Spritzkanal 18b ist dabei dazu vorgesehen, Wischwasser möglichst weit an den Außenkreis 30b des Wischblattes 32b zu spritzen. Dazu weist der erste Spritzkanal 18b nur eine geringe Neigung von ca. 15 Grad zu der Haupterstreckungsrichtung des Wischarms 10b auf. Der zweite Spritzkanal 20b ist ebenfalls in Richtung des Außenkreises 30b gerichtet. Eine Neigung des zweiten Spritzkanals 20b von der Haupterstreckungsrichtung des Wischarms 10b in Richtung der Kraftfahrzeugscheibe ist größer als die Neigung des ersten Spritzkanals 18b und beträgt in etwa 30 Grad.

Das zweite Düsenelement 14b ist ebenfalls zwischen dem Innenkreis 26b des Wischblatts 32b und der Verbindungsadaptereinheit 38b angeordnet. Das zweite Düsenelement 14b ist tendenziell in Richtung des Innenkreises 26b angeordnet. Ein Abstand des zweiten Düsenelements 14b zu dem Innenkreis 26b ist dabei wesentlich kleiner als ein Abstand des Düsenelements 14b zu der Verbindungsadaptereinheit 38b. Der Abstand zwischen dem Düsenelement 14b und der Verbindungsadaptereinheit 38b ist in etwa 8 mal so groß wie der Abstand des Düsenelements 14b zu dem Innenkreis 26b des Wischblatts 32b. Dabei ist das zweite Düsenelement 14b ebenfalls in einer tiefen Position direkt mit dem Wischarm 10b verbunden.

Das zweite Düsenelement 14b ist ebenfalls dazu vorgesehen, Wischwasser zumindest im Wesentlichen in Richtung der Wischlippe 16b zu spritzen. Dazu weist das Düsenelement 14b zwei Spritzkanäle 48b, 50b auf. Die Spritzkanäle 48b, 50b sind direkt mit dem Schlauchanschluss 44b des Düsenelements 14b verbunden. Die Spritzkanäle 48b, 50b führen von einem Inneren des Düsenelements 14b nach außen. Dadurch kann das Wischwasser, das durch den Schlauchanschluss 44b in das Innere des zweiten Düsenelements 14b gepumpt wird über die Spritzkanäle 48b, 50b wieder aus dem Inneren des Düsenelements 14b austreten. Die Spritzkanäle 48b, 50b sind dabei im Wesentlichen in Richtung der Wischlippe 16b ausgerichtet. Ein Ende des ersten Spritzkanals 48b ist dabei in Richtung des Außenkreises 30b gerichtet. Dabei weist der Spritzkanal 48b eine Neigung gegenüber der Haupterstreckungsrichtung des Wischarms 10b auf, die so groß ist, dass das aus dem ersten Spritzkanal 48b spritzende Wischwasser bis zu dem ersten Düsenelement 12b gelangt. Ein Ende des zweiten Spritzkanals 50b ist in Richtung des Innenkreises 26b gerichtet, um so das Wischwasser an den Innenkreis 26b des Wischblatts 32b spritzen zu können.

Figur 3 zeigt ein drittes Ausführungsbeispiel des erfindungsgemäßen Wischsystems. Die Wischvorrichtung umfasst einen Wischarm 10c, der mittels eines nicht näher dargestellten Wischermotors in einer Schwenkbewegung antreibbar ist. Die Wischvorrichtung umfasst ein Wischblatt 32c, das in einem montierten Zustand dazu vorgesehen ist, eine nicht näher dargestellte Kraftfahrzeugscheibe zu Wischen. Das Wischblatt 32c ist aus mehreren Komponenten aufgebaut. Das Wischblatt 32c umfasst eine Wischlippe 16c, die in montiertem Zustand auf der Kraftfahrzeugscheibe aufliegt und eine nicht näher dargestellte Federschiene, die fest mit der Wischlippe 16c verbunden ist und diese über ihre gesamte Länge gegen die Kraftfahrzeugscheibe drückt und dabei eine Wischkraft auf die Wischlippe 16c überträgt. Das Wischblatt 32c ist dabei frei von einer Innenkreisführung. Das Wischblatt 32c weist an seinem Innenkreis 26c keine Innenkreisführung auf, die das Wischblatt 32c an seinem Innenkreis 26b unterhalb des Wischarms 10c fixiert.

Zur Verbindung des Wischblatts 32c mit dem Wischarm 10c weist die Wischvorrichtung eine Verbindungsadaptereinheit 38c auf. Die Verbindungsadaptereinheit 38c weist einen Wischblattadapter 40c und einen Wischarmadapter 42c auf. Der Wischblattadapter 40c ist fest mit dem Wischblatt 32c verbunden. Der Wischarmadapter 42c ist fest mit dem Wischarm 10c verbunden. Dadurch kann das Wischblatt 32c mittels des Wischblattadapters 40c und des Wischarmadapters 42c fest mit dem Wischarm 10c verbunden werden.

Die Wischvorrichtung umfasst weiter ein Düsenelement 12c, das dazu vorgesehen ist, Wischwasser zu versprühen. Dazu weist das Düsenelement 12c zumindest einen Schlauchanschluss 44c auf, an dem ein, in einem Betriebszustand Wischwasser führender, nicht näher dargestellter, Wischwasserschlauch anschließbar ist. Das Düsenelement 14c ist als separates Bauteil ausgebildet. Die Wischvorrichtung umfasst dabei ausschließlich das eine Düsenelement 12c.

Das ausschließlich eine Düsenelement 12c ist an dem Wischarmadapter 42c der Verbindungsadaptereinheit 38c angeordnet. Das Düsenelement 12c ist als ein Kunststoffspritzgussteil ausgebildet und weist eine U-förmige Grundform auf. Ein oberer Bereich 52c des Düsenelements 12c verläuft parallel zu einer dem Wischblatt 32c abgewandten Oberkante des Wischarmadapters 42c. Ein Mittelbereich 54c des Düsenelements 12c steht etwa in einem 90 Grad Winkel zu dem oberen Bereich 52c des Düsenelements 12c und erstreckt sich in montiertem Zustand in Richtung der Kraftfahrzeugscheibe und des Wischblatts 32c. Auf Höhe der Wischlippe 16c weist das Düsenelement 12c einen unteren Bereich 56c auf, der in einem 90 Grad Winkel zu dem Mittelbereich 54c des Düsenelements 12c ausgerichtet ist und sich in Richtung der Wischlippe 16c erstreckt. Der untere Bereich 56c des Düsenelements 12c ist im Vergleich zu dem Mittelbereich 54c und dem oberen Bereich 52c sehr kurz.

Das ausschließlich eine Düsenelement 12c weist zwei Spritzkanäle 48c, 50c auf, die auf einer Höhe der Wischlippe 16c angeordnet sind. Dazu sind die Spritzkanäle 48c, 50c in dem unteren Bereich 56c des Düsenelements 12c integriert. Die Spritzkanäle 48c, 50c sind in einer der Wischlippe 16c zugewandten Seite des unteren Bereichs 56c in dem Düsenelement 12c integriert, wodurch das aus den Enden der Spritzkanäle 48c, 50c tretende Wischwasser direkt auf die Wischlippe 16c gelangen kann. Dabei ist das Ende des ersten Spritzkanals 48c in Richtung des Innenkreises 26c des Wischblatts 32c gerichtet, wodurch durch den ersten Spritzkanal 48c ein Bereich zwischen der Verbindungsadaptereinheit 38c und dem Innenkreis 26c des Wischblatts 32c mit Wischwasser versorgt werden kann. Das Ende des zweiten Spritzkanals 50c ist in Richtung des Außenkreises 30c des Wischblatts 32c gerichtet, wodurch durch den zweiten Spritzkanal 50c ein Bereich zwischen der Verbindungsadaptereinheit 38c und dem Außenkreis 30c des Wischblatts 32c mit Wischwasser versorgt werden kann. Grundsätzlich ist es dabei auch denkbar, dass in das ausschließlich eine Düsenelement 12c weitere Spritzkanäle integriert sind. Dabei ist es sowohl möglich dass die weiteren Spritzkanäle in Richtung des Innenkreises 26c als auch in Richtung des Außenkreises 30c des Wischblatts 32c gerichtet sind. Durch das Spritzen des Wischwassers direkt auf die Wischlippe 16c kann das Wischwasser sehr gut über die gesamte Wischlippe 16c verteilt werden.

## Patentansprüche

1. Wischsystem mit einem Wischblatt und einer Wischvorrichtung mit zumindest einem Wischarm (10a; 10b; 10c) und mit zumindest einem Düsenelement (12a; 12b, 14b; 12c), das dazu vorgesehen ist, ein Wischwasser zu versprühen, wobei das zumindest eine Düsenelement (12a; 12b, 14b; 12c) in einer tiefen Position direkt mit dem Wischarm (10a; 10b; 10c) verbunden ist, **dadurch gekennzeichnet, dass** das Düsenelement zumindest 10 mm unter einer Unterkante des Wischarms hinausragt und sich dadurch im Bezug auf die Kraftfahrzeugscheibe auf einer gleichen Höhe wie eine Wischlippe des Wischblatts befindet.

2. Wischsystem nach Anspruch 1, **dadurch gekennzeichnet, dass** das zumindest eine Düsenelement (12a; 12b, 14b; 12c) als ein separates Bauteil ausgebildet ist.

3. Wischsystem nach Anspruch 1 oder 2, **dadurch gekennzeichnet, dass** das zumindest eine Düsenelement (12a; 12b, 14b; 12c) dazu vorgesehen ist, ein Wischwasser zumindest im Wesentlichen in Richtung einer Wischlippe (16a; 16b; 16c) zu spritzen.

4. Wischsystem nach einem der vorhergehenden Ansprüche, **dadurch gekennzeichnet, dass** das zumindest eine Düsenelement (12a; 12b, 14b; 12c) zumindest einen Spritzkanal (18a, 20a; 22a, 24a; 18b, 20b, 48b, 50b; 48c, 50c) aufweist, dessen Ende zumindest im Wesentlichen in Richtung der Wischlippe (16a; 16b; 16c) gerichtet ist.

5. Wischsystem zumindest nach Anspruch 4, **dadurch gekennzeichnet, dass** das Düsenelement (12a; 12b, 14b; 12c) zumindest einen weiteren Spritzkanal (18a, 20a; 22a, 24a; 18b, 20b, 48b, 50b; 48c, 50c) aufweist, dessen Ende in eine andere Richtung gerichtet ist als das Ende des ersten Spritzkanals (18a, 20a; 22a, 24a; 18b, 20b, 48b, 50b; 48c, 50c).

6. Wischsystem nach einem der vorhergehenden Ansprüche, **dadurch gekennzeichnet, dass** das zumindest eine Düsenelement (12a; 12b) zwischen einem Innenkreis (26a; 26b) eines Wischblatts (10a; 10b) und einer Verbindungsadaptereinheit (38a; 38b) näher in Richtung der Verbindungsadaptereinheit (38a; 38b) angeordnet ist.

7. Wischsystem nach einem der vorhergehenden Ansprüche, **gekennzeichnet durch** ein zweites Düsenelement (14b), wobei die zweite Düseneinheit (14b) tendenziell in Richtung des Innenkreises (26b) angeordnet ist.

8. Wischsystem nach einem der vorhergehenden Ansprüche, **dadurch gekennzeichnet, dass** der Wischarm einen Wischarmadapter (42c) aufweist, an dem das eine Düsenelement (12c) angeordnet ist.

9. Wischsystem nach Anspruch 8, **dadurch gekennzeichnet, dass** das Düsenelement (12c) zumindest zwei Spritzkanäle (48c, 50c) aufweist, wobei ein Ende des einen Spritzkanals (48c, 50c) in Richtung eines Innenkreises (26c) und ein Ende des anderen Spritzkanals (48c, 50c) in Richtung eines Außenkreises (30c) gerichtet ist.

## Claims

1. Wiper system with a wiper blade and a wiper device with at least one wiper arm (10a; 10b; 10c) and with at least one nozzle element (12a; 12b, 14b; 12c) which is provided for spraying wiping water, wherein the at least one nozzle element (12a; 12b, 14b; 12c) is directly connected in a low position to the wiper arm (10a; 10b; 10c), **characterized in that** the nozzle element protrudes at least 10 mm below a lower edge of the wiper arm and is thereby at the same height as a wiper lip of the wiper blade with respect to the outer vehicle window.

2. Wiper system according to Claim 1, **characterized in that** the at least one nozzle element (12a; 12b, 14b; 12c) is embodied as a separate component.

3. Wiper system according to Claim 1 or 2, **characterized in that** the at least one nozzle element (12a; 12b, 14b; 12c) is provided to spray wiping water at least substantially in the direction of a wiper lip (16a; 16b; 16c).

4. Wiper system according to one of the preceding claims, **characterized in that** the at least one nozzle element (12a; 12b, 14b; 12c) has at least one spray channel (18a, 20a; 22a, 24a; 18b, 20b, 48b, 50b; 48c, 50c), the end of which is at least substantially directed in the direction of the wiper lip (16a; 16b; 16c).

5. Wiper system at least according to Claim 4, **characterized in that** the nozzle element (12a; 12b, 14b; 12c) has at least one further spray channel (18a, 20a; 22a, 24a; 18b, 20b, 48b, 50b; 48c, 50c), the end of which is directed in a different direction than the end of the first spray channel (18a, 20a; 22a, 24a; 18b, 20b, 48b, 50b; 48c, 50c) .

6. Wiper system according to one of the preceding claims, **characterized in that** the at least one nozzle element (12a; 12b) is arranged between an inner circle (26a; 26b) of a wiper blade (10a; 10b) and a connection adapter unit (38a; 38b), in closer proximity towards the connection adapter unit (38a; 38b) .

7. Wiper system according to one of the preceding claims, **characterized by** a second nozzle element (14b), wherein the second nozzle unit (14b) tends to be arranged in the direction of the inner circle (26b).

8. Wiper system according to one of the preceding claims, **characterized in that** the wiper arm has a wiper arm adapter (42c) on which the one nozzle element (12c) is arranged.

9. Wiper system according to Claim 8, **characterized in that** the nozzle element (12c) has at least two spray channels (48c, 50c), wherein an end of the one spray channel (48c, 50c) is directed towards an inner circle (26c) and an end of the other spray channel (48c, 50c) is directed towards an outer circle (30c) .

## Revendications

1. Système d'essuie-glace comprenant un balai d'essuie-glace et un dispositif d'essuie-glace comprenant au moins un bras d'essuie-glace (10a ; 10b ; 10c) et au moins un élément de buse (12a ; 12b, 14b ; 12c) qui est prévu pour pulvériser de l'eau de lavage, l'au moins un élément de buse (12a ; 12b, 14b ; 12c) étant connecté dans une position basse directement au bras d'essuie-glace (10a ; 10b ; 10c), **caractérisé en ce que** l'élément de buse fait saillie sur au moins 10 mm en dessous d'un bord inférieur du bras d'essuie-glace et se trouve de ce fait par rapport au pare-brise du véhicule automobile à la même hauteur qu'une lèvre de balai d'essuie-glace du balai d'essuie-glace.

2. Système d'essuie-glace selon la revendication 1, **caractérisé en ce que** l'au moins un élément de buse (12a ; 12b, 14b ; 12c) est réalisé sous forme de composant séparé.

3. Système d'essuie-glace selon la revendication 1 ou 2, **caractérisé en ce que** l'au moins un élément de buse (12a ; 12b, 14b ; 12c) est prévu pour pulvériser de l'eau de lavage au moins essentiellement dans la direction d'une lèvre de balai d'essuie-glace (16a ; 16b ; 16c).

4. Système d'essuie-glace selon l'une quelconque des revendications précédentes, **caractérisé en ce que** l'au moins un élément de buse (12a ; 12b, 14b ; 12c) présente au moins un canal de pulvérisation (18a, 20a ; 22a, 24a ; 18b, 20b, 48b, 50b ; 48c, 50c) dont l'extrémité est orientée au moins essentiellement dans la direction de la lèvre de balai d'essuie-glace (16a ; 16b ; 16c).

5. Système d'essuie-glace selon au moins la revendication 4, **caractérisé en ce que** l'élément de buse (12a ; 12b, 14b ; 12c) présente au moins un canal de pulvérisation supplémentaire (18a, 20a ; 22a, 24a ; 18b, 20b, 48b, 50b ; 48c, 50c) dont l'extrémité est orientée dans une autre direction que l'extrémité du premier canal de pulvérisation (18a, 20a ; 22a, 24a ; 18b, 20b, 48b, 50b ; 48c, 50c) .

6. Système d'essuie-glace selon l'une quelconque des revendications précédentes, **caractérisé en ce que** l'au moins un élément de buse (12a ; 12b) est disposé entre un cercle intérieur (26a ; 26b) d'un balai d'essuie-glace (10a ; 10b) et une unité d'adaptateur de connexion (38a ; 38b) plus près dans la direction de l'unité d'adaptateur de connexion (38a ; 38b).

7. Système d'essuie-glace selon l'une quelconque des revendications précédentes, **caractérisé par** un deuxième élément de buse (14b), la deuxième unité de buse (14b) étant généralement disposée dans la direction du cercle intérieur (26b).

8. Système d'essuie-glace selon l'une quelconque des revendications précédentes, **caractérisé en ce que** le bras d'essuie-glace présente un adaptateur de bras d'essuie-glace (42c) au niveau duquel est disposé ledit un élément de buse (12c).

9. Système d'essuie-glace selon la revendication 8, **caractérisé en ce que** l'élément de buse (12c) présente au moins deux canaux de pulvérisation (48c, 50c), une extrémité de l'un des canaux de pulvérisation (48c, 50c) étant orientée dans la direction d'un cercle intérieur (26c) et une extrémité de l'autre canal de pulvérisation (48c, 50c) étant orientée dans la direction d'un cercle extérieur (30c).
